# FASCICULE DE BREVET EUROPEEN

(11) **EP 1 240 936 B1**
(45) Date de publication et mention de la délivrance du brevet: **20.02.2008**
(21) Numéro de dépôt: 02000762.1
(22) Date de dépôt: 14.01.2002
(51) Int. Cl.: B01D 53/26, F25B 49/02

(54) **Secheur d'air comprimé à cycle frigorifique et procédé de mise en oeuvre d'un tel sécheur**
Drucklufttrockner mit Kältemittelkreislauf und Verfahren zum Betrieb eines solchen Trockners
Compressed air drier with cooling cycle and method for using such a drier

(30) Priorité: 12.03.2001 LU 90739
(43) Date de publication de la demande: 18.09.2002
(73) Titulaire: M.T.A. S.p.A., 35026 Conselve PD (IT)
(72) Inventeur: Baynton, M. Allan, Westcliff-on-Sea, Essex (GB)
(74) Mandataire: Cantaluppi, Stefano

(56) Documents cités:
- EP-A- 0 308 532
- EP-A- 0 893 657
- EP-A- 1 081 445
- WO-A-99/61135
- DE-A- 4 027 838
- DE-U- 8 712 812
- FR-A- 1 594 404
- US-A- 4 482 007
- US-A- 5 228 504
- US-A- 5 675 979

## Description

### Domaine technique auquel se rapporte l'invention

La présente invention a pour objet un sécheur d'air comprimé à cycle frigorifique et un procédé de mise en oeuvre d'un tel sécheur.

### État de la technique antérieure

Dans la technologie de l'air comprimé il existe de nombreuses applications dans lesquelles il est nécessaire de sécher l'air. Il est connu d'utiliser à cet effet des sécheurs d'air comprenant notamment un circuit frigorifique avec une unité de compression du frigorigène et un évaporateur du frigorigène, l'air à sécher étant mis en condition d'échange thermique avec ledit évaporateur afin d'obtenir son séchage par refroidissement. Il sera noté que dans un tel sécheur la puissance frigorifique requise pour le séchage de l'air comprimé peut varier fortement, ce qui entraîne une fréquence élevée des cycles d'activation/désactivation de l'unité de compression. Or, une fréquence trop élevée des cycles d'activation/désactivation de l'unité de compression peut compromettre la durée de vie utile de cette dernière.

Pour limiter la fréquence d'activation et désactivation de l'unité de compression dans un sécheur d'air comprimé, deux méthodes sont actuellement utilisées.

La première méthode prévoit de soustraire une fraction du débit frigorigène comprimé à l'évaporation dans l'évaporateur en la recyclant à travers une soupape de by-pass à l'admission au compresseur. La fraction soustraite est réglée en fonction de la charge thermique du sécheur. Cette façon de procéder permet de régler la puissance frigorifique du circuit frigorifique en fonction du débit et des paramètres thermodynamiques de l'air comprimé à traiter. Le principal inconvénient de cette première méthode est un faible rendement thermodynamique, puisqu'une partie de l'énergie accumulée en phase de compression du frigorigène est "gâchée" pour de simples fonctions de réglage.

La seconde méthode prévoit de stocker l'énergie frigorifique en excès dans un ou plusieurs accumulateurs de frigories, comprenant par exemple une certaine masse de sable ou d'une solution à faible point de congélation. De cette façon on arrive à allonger les intervalles entre les cycles successifs d'activation et désactivation du compresseur. Cette seconde méthode ne peut toutefois s'utiliser raisonnablement que lorsque les débits de frigorigène en jeu sont relativement faibles, étant donné le coût élevé, l'encombrement et le poids des accumulateurs de frigories nécessaires.

Un sécheur ayant les caractéristiques énumérées dans le préambule de la revendication principale est décrit dans la demande de brevet international WO 99/61135.

### Objet de l'invention

Le problème à la base de la présente invention est de proposer une solution qui permet de réduire la fréquence des cycles d'activation/désactivation du ou des compresseurs frigorifiques d'un sécheur d'air comprimé, sans pour autant détériorer le rendement énergétique et sans nécessiter des accumulateurs de frigories chers et encombrants.

### Exposé de l'invention

Ce problème est résolu par un sécheur d'air comprimé selon la revendication 1, respectivement par un procédé de mise en oeuvre d'un sécheur d'air comprimé selon la revendication 7.

Un sécheur d'air selon l'invention comprend, de façon connue en soi, un circuit frigorifique avec une unité de compression du frigorigène et un évaporateur du frigorigène. L'air comprimé à sécher est mis en condition d'échange thermique avec l'évaporateur afin d'obtenir son séchage par refroidissement. Selon un aspect important de la présente invention, l'unité de compression est de type à débit réglable entre une valeur minimale non nulle et une valeur maximale. Un système de réglage est associé à cette unité de compression de façon à régler le débit de frigorigène comprimé en fonction de la charge thermique (sensible et latente) de l'air comprimé à évacuer à l'évaporateur, avec comme but de rapprocher la puissance frigorifique du circuit frigorifique de la puissance frigorifique requise à l'évaporateur pour assurer le séchage de l'air comprimé. Il sera apprécié que ce réglage du débit de frigorigène comprimé permet de régler la puissance frigorifique du circuit frigorifique tout en garantissant un rendement thermodynamique acceptable du cycle frigorifique. Le réglage du débit de frigorigène comprimé peut par ailleurs être un réglage continu à partir d'un débit minimal non nul, qui détermine une puissance frigorifique minimale délivrable par le circuit frigorifique, ou un réglage discontinu par n paliers (n≥2), qui se distingue également par une puissance frigorifique minimale délivrable par le circuit frigorifique. Selon un autre aspect important de la présente invention, un accumulateur thermique est associé à l'évaporateur. Cet accumulateur est dimensionné de façon à pouvoir accumuler pendant un temps d'accumulation prédéterminé les frigories produites en excès lorsque le circuit frigorifique fonctionne avec sa puissance frigorifique minimale (c'est-à-dire lorsque l'unité de compression fonctionne avec son débit minimal), alors que la puissance frigorifique requise à l'évaporateur est proche de zéro. Lorsque l'accumulateur thermique est entièrement chargé, l'unité de compression est désactivée et l'accumulateur thermique se décharge en transférant les frigories accumulées à l'air comprimé. Dans le cas d'un réglage du débit frigorigène par n paliers identiques, la puissance frigorifique du cycle frigorifique varie également par n paliers identiques. L'accumulateur thermique pourra dans ce cas être dimensionné pour accumuler pendant ledit temps prédéterminé une fraction 1/n de la puissance frigorifique totale de l'unité de compression. Lorsque le circuit frigorifique fonctionne avec une puissance frigorifique correspondant au palier immédiatement supérieure à la puissance requise à l'évaporateur, alors l'accumulateur thermique se charge avec des frigories. Lorsque l'accumulateur thermique est entièrement chargé, la puissance frigorifique est réduite au palier immédiatement inférieure à la puissance requise à l'évaporateur. Maintenant l'accumulateur thermique se décharge en transférant les frigories accumulées à l'air comprimé.

Vu que la capacité thermique de l'accumulateur thermique associé à l'évaporateur ne doit être capable d'absorber qu'une petite fraction de la puissance totale du circuit frigorifique, il sera normalement suffisant de surdimensionner la masse thermique de l'évaporateur pour lui confier une « capacité thermique » permettant d'obtenir des temps d'accumulation suffisants. Par « masse thermique » on entend ici la masse de l'évaporateur concourant à l'échange thermique entre l'air et le frigorigène.

Pour assurer un réglage du débit frigorigène par paliers, l'unité de compression comprend avantageusement au moins deux compresseurs mis en parallèle dans le circuit frigorifique. Alternativement elle peut aussi comprendre un compresseur à plusieurs cylindres dont le nombre de cylindres en action peut être varié.

Pour assurer un réglage du débit frigorigène en continu, l'unité de compression comprend avantageusement au moins un compresseur avec au moins un cylindre à cylindrée variable ou au moins un compresseur à vitesse variable.

### Brève description des Figures

Les caractéristiques et les avantages de l'invention ressortiront de la description détaillée d'exemples préférés de sa mise en oeuvre, donnée ci-après à titre d'illustration non limitative sur base du dessin ci-joint, dans lequel:

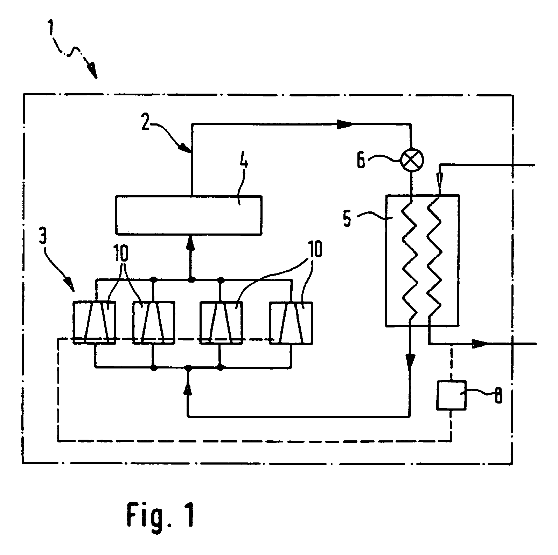

- FIG. 1 est une schéma simplifié d'un sécheur d'air comprimé selon la présente invention

### Description détaillée de quelques modes de réalisation avantageux de l'invention

La référence 1 indique globalement un sécheur pour air comprimé à cycle frigorifique. Ce sécheur 1 comprend un circuit frigorifique 2 incluant une unité de compression 3 du frigorigène, un condensateur 4 pour la condensation du frigorigène comprimé et une unité d'expansion avec un évaporateur 5 raccordé par l'intermédiaire d'une soupape de laminage 6 au condensateur 4, d'une part, et à l'unité de compression 3, d'autre part. Un tel schéma de circuit frigorifique est, en soi, traditionnel.

Le circuit frigorifique 2 est en outre doté d'un système de réglage comprenant un contrôle thermostatique et/ou pressostatique 8 associé à l'évaporateur 5 et actif sur l'unité de compression 3 pour modifier le débit du frigorigène comprimé distribué à la soupape de laminage 6.

La tâche du système de réglage consiste à maintenir dans un intervalle de température préfixé la température de l'air séché, en aval de l'évaporateur 5, lors de la variation de la charge thermodynamique sur le sécheur, c'est-à-dire lors de la variation du débit d'air à sécher et/ou des paramètres thermodynamiques de débit.

A cette fin, on prévoit une unité de compression 3 de type à débit frigorigène réglable, permettant un réglage en continu ou en discontinu (c'est-à-dire par paliers) du débit frigorigène comprimé par l'unité de compression 3.

L'unité de compression 3 de la FIG. 1 est à réglage par paliers. Elle comprend à cette effet n compresseurs 10 (n≥2), qui sont connectés en parallèle et peuvent être activés selon une logique séquentielle déterminée par un algorithme de réglage. Les compresseurs 10 seront de préférence dimensionnés pour des débits de frigorigène égaux (par exemple, quatre compresseurs délivrant chacun 25% du débit total). Il sera noté que la séquence d'activation des n compresseurs 10 peut être déterminée de façon à ce que le module de la différence maximale entre puissance frigorifique instantanée délivrée par l'unité de compression 3 et la charge frigorifique instantanée requise à l'évaporateur 5 pour sécher l'air comprimé sera inférieur à la puissance délivrée par un des n compresseurs 10.

L'évaporateur 5 est quant à lui conçu comme accumulateur thermique avec une capacité thermique (M) qui est dimensionnée de façon à pouvoir absorber pendant un temps prédéterminé t1 au moins les frigories produites par un des compresseurs 10. En d'autres termes, un compresseur 10 peut fonctionner pendant un temps prédéterminé t1 pour charger des frigories dans l'évaporateur 5, où le temps t1 est choisi de façon à garantir des cycles d'activation/désactivation acceptables pour les compresseurs 10..

En pratique, la capacité thermique (M) de l'évaporateur 5 est obtenue par une simple augmentation de la masse thermique de l'évaporateur par rapport aux paramètres conceptuels traditionnels. Par "masse thermique" en entend la masse de l'évaporateur concourant à l'échange thermique et à l'accumulation de frigories, afin que le nombre de cycles d'activation/désactivation d'un compresseur 10 de l'unité de compression reste limité dans les valeurs fixées par le producteur du compresseur. Au lieu d'utiliser une unité de compresseurs 3 à plusieurs compresseurs 10 montés en parallèle, on peut aussi utiliser un compresseur multi-cylindre connu en soi, dans lequel il est possible de mettre en service les cylindres de façon séquentielle et de varier ainsi la cylindrée utile par paliers.

On peut également utiliser un unité de compression comprenant un compresseur qui permet un réglage continu du débit de frigorigène à partir d'un débit minimal (non nul). Il s'agit par exemple d'un compresseur à cylindrée variable ou d'un compresseur à vitesse de rotation variable. Dans ce cas, la capacité thermique (M) intervient principalement pour réduire la fréquence d'enclenchement du compresseur lorsque la charge calorifique à l'évaporateur est inférieure à la puissance frigorifique minimale en dessous de laquelle un réglage en continu du débit de frigorigène est impossible.

L'invention résout ainsi le problème proposé et permet d'obtenir de nombreux avantages par rapport aux sécheurs traditionnels. Un avantage important est entre autres constitué par le fait que le sécheur s'avère utile pour équiper des installations de production d'air comprimé avec des débits moyens à élevés. En effet, le réglage de la puissance de l'unité compresseur ne pénalise pas le rendement global du circuit frigorifique et en même temps, implique des coûts, poids et encombrements sensiblement réduits en comparaison avec les sécheurs d'air comprimé à accumulateurs thermiques à sable ou à solution à faible point de congélation.

## Revendications

1. Sécheur d'air à cycle frigorifique comprenant un circuit frigorifique (2) avec une unité de compression (3) du frigorigène et un évaporateur (5) du frigorigène, dans lequel:
ladite unité de compression (3) est du type à débit réglable entre une valeur minimale non nulle et une valeur maximale, ladite valeur minimale non nulle déterminant la puissance frigorifique minimale dudit circuit frigorifique (2);
un système de réglage (8) est associé à ladite unité de compression (3) de façon à régler le débit de frigorigène comprimé en fonction de la charge thermique de l'air comprimé à évacuer, avec comme but de rapprocher la puissance frigorifique du circuit frigorifique (2) de la puissance frigorifique requise à l'évaporateur (5) pour assurer le séchage de l'air comprimé ;
et **caractérisé en ce que**:
un accumulateur thermique est associé à l'évaporateur (5) et est dimensionné de façon à pouvoir accumuler pendant un temps d'accumulation prédéterminé, choisi de façon à garantir des cycles d'activation/désactivation acceptables pour ladite unité de compression, les frigories produites en excès lorsque le circuit frigorifique (2) fonctionne avec sa puissance frigorifique minimale, alors que la puissance frigorifique requise à l'évaporateur (5) est proche de zéro, ledit accumulateur thermique étant constitué de la masse surdimensionnée de l'évaporateur concourant a l'échange thermique entre l'air e le frigorigène et apte à se décharger en transférant les frigories accumulées à l'air comprimé.

2. Sécheur d'air selon la revendication 1 dans lequel ledit dispositif de contrôle comprend un contrôle thermostatique.

3. Sécheur selon une ou plusieurs des revendications 1 ou 2, dans lequel ladite unité de compression (3) comprend au moins deux compresseurs (10) mis en parallèle dans ledit circuit frigorifique (2).

4. Sécheur selon l'une quelconque des revendications de 1 à 3, dans lequel ladite unité de compression (3) comprend au moins un compresseur avec au moins un cylindre à cylindrée variable.

5. Sécheur selon l'une quelconque des revendications de 1 à 3, dans lequel ladite unité de compression (3) comprend un compresseur à plusieurs cylindres dont le nombre de cylindres en action peut être varié.

6. Sécheur selon une ou plusieurs des revendications de 1 à 4, dans lequel ladite unité de compression (3) comprend au moins un compresseur à vitesse variable.

7. Procédé de mise en oeuvre d'un sécheur d'air comprimé comprenant un circuit frigorifique avec une unité de compression du frigorigène et un évaporateur du liquide frigorigène, dans lequel:
on met l'air comprimé à sécher en condition d'échange thermique avec ledit évaporateur du frigorigène;
on règle le débit de frigorigène comprimé en fonction de la charge thermique de l'air comprimé à évacuer, avec comme but de rapprocher la puissance frigorifique du circuit frigorifique de la puissance frigorifique requise à l'évaporateur pour assurer le séchage de l'air comprimé; et **caractérisé en ce que**:
on met l'air comprimé à sécher et le frigorigène en condition d'échange thermique avec un accumulateur qui est dimensionné de façon à pouvoir accumuler pendant un temps d'accumulation prédéterminé les frigories produites en excès lorsque le circuit frigorifique fonctionne avec sa puissance frigorifique minimale, alors que la puissance frigorifique requise à l'évaporateur est proche de zéro, ledit accumulateur thermique étant constitué de la masse thermique surdimensionnée dudit évaporateur (5) et apte à se décharger en transférant les frigories accumulées à l'air comprimé, l'accumulateur thermique étant choisi de façon à garantir des cycles d'activation/désactivation acceptables pour ladite unité de compression.

8. Procédé selon la revendication 7 comprenant un réglage continu du débit de frigorigène de ladite unité de compression à partir d'une valeur minimale non nulle.

9. Procédé selon la revendication 7 comprenant un réglage par paliers du débit de frigorigène de ladite unité de compression.

## Claims

1. Air dryer with a refrigerant cycle comprising a refrigerant circuit (2) with a unit (3) for compression of the refrigerant and a refrigerant evaporator (5), wherein:
the said compression unit (3) is of the type with an output which is adjustable between a non-zero minimal value and a maximal value, the said non-zero minimal value determining the minimal refrigerant power of the said refrigerant circuit (2);
an adjustment system (8) is associated with the said compression unit (3) such as to regulate the output of compressed refrigerant according to the thermal load of the compressed air to be discharged, with the aim of bringing the refrigerant power of the refrigerant circuit (2) close to the refrigerant power required at the evaporator (5), in order to assure the drying of the compressed air;
and **characterised in that**:
a thermal accumulator is associated with the evaporator (5), and is of a size such as to be able to accumulate for a predetermined accumulation time selected such as to guarantee cycles of activation/deactivation which are acceptable for the said compression unit, the frigories produced in excess when the refrigerant circuit (2) is functioning with its minimal refrigerant power, whereas the refrigerant power required at the evaporator (5) is close to zero, the said thermal accumulator consisting of the oversized mass of the evaporator which contributes towards the thermal exchange between the air and the refrigerant, and can be discharged by transferring the frigories accumulated to the compressed air.

2. Air dryer according to claim 1, wherein the said control device comprises a thermostatic control.

3. Dryer according to one or both of claims 1 or 2, wherein the said compression unit (3) comprises at least two compressors (10) which are put in parallel in the said refrigerant circuit (2).

4. Dryer according to any one of claims 1 to 3, wherein the said compression unit (3) comprises at least one compressor with at least one cylinder with variable capacity.

5. Dryer according to any one of claims 1 to 3, wherein the said compression unit (3) comprises a compressor with a plurality of cylinders, the number of cylinders in action of which can be varied.

6. Dryer according to one or more of claims 1 to 4, wherein the said compression unit (3) comprises at least one variable-speed compressor.

7. Method for implementation of a compressed air dryer comprising a refrigerant circuit with a unit for compression of the refrigerant and an evaporator for the refrigerant fluid, wherein:
compressed air to be dried is put into a condition of thermal exchange with the said evaporator of the refrigerant;
the output of compressed refrigerant is regulated according to the thermal load of the compressed air to be discharged, with the aim of bringing the refrigerant power of the refrigerant circuit close to the refrigerant power required at the evaporator, in order to assure the drying of the compressed air; and
**characterised in that**:
the compressed air to be dried and the refrigerant are put into a condition of thermal exchange with an accumulator which is of a size such as to be able to accumulate for a predetermined accumulation time the frigories produced in excess when the refrigerant circuit is functioning with its minimal refrigerant power, whereas the refrigerant power required at the evaporator is close to zero, the said thermal accumulator consisting of the oversized thermal mass of the said evaporator (5), and being able to be discharged by transferring the frigories accumulated to the compressed air, the thermal accumulator being selected such as to guarantee cycles of activation/deactivation which are acceptable for the said compression unit.

8. Method according to claim 7, comprising continuous regulation of the output of refrigerant from the said compression unit starting from a minimum non-zero value.

9. Method according to claim 7, comprising regulation in steps of the output of refrigerant from the said compression unit.

## Patentansprüche

1. Lufttrockner mit Kühlprozess, der einen Kühlkreislauf (2) mit einer Kompressionseinheit (3) des Kältemittels und einen Verdampfer (5) des Kältemittels umfasst, wobei:
die Kompressionseinheit (3) vom Typ der zwischen einem minimalen Wert von ungleich null und einem maximalen Wert steuerbaren Durchflussmenge ist, wobei der minimale Wert von ungleich null die minimale Kühlleistung des Kühlkreislaufes (2) bestimmt;
ein Steuerungssystem (8) der Kompressionseinheit (3) derart zugeordnet ist, dass es die Durchflussmenge des komprimierten Kältemittels entsprechend der abzuführenden Wärmelast der komprimierten Luft mit dem Ziel steuert, die Kühlleistung des Kühlkreislaufes (2) an die an dem Verdampfer (5) geforderte Kühlleistung anzugleichen, um das Trocknen der komprimierten Luft sicherzustellen; und
**dadurch gekennzeichnet, dass**:
ein thermischer Speicher dem Verdampfer (5) zugeordnet und in einer Weise dimensioniert ist, dass er während einer vorbestimmten Speicherzeit, die derart gewählt ist, dass für die Kompressionseinheit geeignete Zyklen von Aktivierung/Deaktivierung gewährleistet sind, die im Überschuss erzeugten Kälteenergieeinheiten speichern kann, wenn der Kühlkreislauf (2) mit seiner minimalen Kühlleistung arbeitet, während die an dem Verdampfer (5) geforderte Kühlleistung nahe Null ist, wobei der thermische Speicher aus der überdimensionierten Masse des Verdampfers besteht, die zu dem Wärmeaustausch zwischen der Luft und dem Kältemittel beiträgt und dazu geeignet ist sich zu entladen, indem die gespeicherten Kälteenergieeinheiten an die komprimierte Luft übertragen werden.

2. Lufttrockner gemäß Anspruch 1, wobei die Steuerungsvorrichtung eine thermostatisch Steuerung umfasst.

3. Lufttrockner gemäß einem oder mehreren der Ansprüche 1 oder 2, wobei die Kompressionseinheit (3) mindestens zwei Kompressoren (10) umfasst, die in dem Kühlkreislauf (2) parallel angeordnet sind.

4. Lufttrockner gemäß einem der Ansprüche 1 bis 3, wobei die Kompressionseinheit (3) mindestens einen Kompressor mit mindestens einem Zylinder mit variablem Hubraum umfasst.

5. Lufttrockner gemäß einem der Ansprüche 1 bis 3, wobei die Kompressionseinheit (3) einen Kompressor mit mehreren Zylindern umfasst, dessen in Betrieb befindliche Anzahl von Zylindern variiert werden kann.

6. Lufttrockner gemäß einem oder mehreren der Ansprüche 1 bis 4, wobei die Kompressionseinheit (3) mindestens einen Kompressor mit variabler Geschwindigkeit umfasst.

7. Verfahren zur Anwendung eines Drucklufttrockners, das einen Kühlkreislauf mit einer Kompressionseinheit des Kältemittels und einen Verdampfer der Kältemittelflüssigkeit umfasst, wobei:
die zu trocknende komprimierte Luft in einen Zustand thermischen Austausches mit dem Verdampfer des Kältemittels versetzt wird;
die Durchflussmenge des komprimierten Kältemittels entsprechend der abzuführenden Wärmelast der komprimierten Luft mit dem Ziel gesteuert wird, die Kühlleistung des KühlKreislaufes an die an dem Verdampfer geforderte Kühlleistung anzupassen, um das Trocknen der komprimierten Luft zu gewährleisten; und
**dadurch gekennzeichnet, dass**:
die zu trocknende komprimierte Luft und das Kältemittel in einen Zustand des Wärmeaustausches mit einem Speicher versetzt werden, der derart dimensioniert ist, dass er während einer vorbestimmten Speicherzeit die im Überschuss erzeugten Kälteenergieeinheiten speichern kann, wenn der Kühlkreislauf mit seiner minimalen Kühlleistung arbeitet während die an dem Verdampfer geforderte Kühlleistung nahe Null ist, wobei der thermische Speicher aus der überdimensionierten Masse des Verdampfers (5) besteht und dazu geeignet ist sich zu entladen, indem die akkumulierten Kälteenergieeinheiten an die komprimierte Luft übertragen werden, wobei der thermische Speicher der Art gewählt ist, dass für die Kompressionseinheit akzeptable Zyklen von Aktivierung/Deaktivierung gewährleistet sind.

8. Verfahren gemäß Anspruch 7, das eine kontinuierliche Steuerung der Durchflussmenge des Kältemittels der Kompressionseinheit bei einem minimalen Wert ungleich Null beginnend umfasst.

9. Verfahren gemäß Anspruch 7, das eine stufenförmige Steuerung der Durchflussmenge des Kältemittels der Kompressionseinheit umfasst.
